# FASCICULE DE BREVET EUROPEEN

(11) **EP 1 535 558 B1**
(45) Date de publication et mention de la délivrance du brevet: **03.10.2007**
(21) Numéro de dépôt: 04356112.5
(22) Date de dépôt: 25.06.2004
(51) Int. Cl.: A47J 43/046, A47J 42/56

(54) **Appareil éléctroménager de préparation culinaire comportant un récipient de travail verrouillé sur un boitier**
Elektrisches Küchengerät mit verriegeltem Behälter auf einem Gehäuse
Electric kitchen device having a receptacle locked onto a housing

(30) Priorité: 03.07.2003 FR 0308130
(43) Date de publication de la demande: 01.06.2005
(73) Titulaire: SEB S.A., 69130 Ecully (FR)
(72) Inventeur: Beaudet, Jean Yves, 61410 Haleine (FR)
(74) Mandataire: Kiehl, Hubert

(56) Documents cités:
- WO-A-00/13563
- US-A- 3 786 999
- US-A- 4 174 073

## Description

La présente invention concerne le domaine technique des appareils électroménagers de préparation culinaire comportant un récipient de travail monté sur un boîtier contenant une motorisation.

Dans les appareils du type précité, le récipient de travail comporte un accessoire de travail rotatif à entraînement inférieur. Ces appareils comprennent notamment les appareils prévus pour le mélange de préparations liquides tels que les blenders, comportant une sortie d'entraînement sur le dessus du boîtier. Ces appareils comprennent également les robots culinaires comportant une ou plusieurs sorties d'entraînement sur le dessus du boîtier.

Il est connu du document US 3 786 999 un appareil de type blender comportant un boîtier moteur présentant en sa partie supérieure un logement agencé autour de la sortie d'entraînement. Le logement présente quatre faces latérales. Deux protubérances à face supérieure biseautée sont montées mobiles dans deux faces latérales opposées. Chaque protubérance est associée à un ressort de rappel et peut être déplacée selon une direction radiale par une pièce de manoeuvre agencée sur une bordure du boîtier. La partie inférieure du récipient de travail est prévue pour être engagée dans le logement et comporte deux ouvertures latérales prévues pour recevoir les protubérances. Le mouvement de la pièce de manoeuvre permet de libérer les protubérances afin de retirer le récipient de travail du boîtier moteur. Cette construction permet de plus d'engager axialement le récipient de travail sur le boîtier et d'obtenir un verrouillage sans actionner la pièce de manoeuvre.

La construction précitée présente toutefois l'inconvénient d'être relativement encombrante. De plus l'effort de retenue est assez limité.

L'objet de la présente invention est de proposer un appareil de préparation culinaire comportant un dispositif de verrouillage d'un récipient de travail sur un boîtier présentant une construction compacte.

Un autre objet de la présente invention est de proposer un appareil de préparation culinaire comportant un dispositif de verrouillage d'un récipient de travail sur un boîtier présentant un maintien efficace du récipient de travail.

Un autre objet de la présente invention est de proposer un appareil de préparation culinaire comportant un dispositif de verrouillage d'un récipient de travail sur un boîtier présentant une construction simple.

Un autre objet de la présente invention est de proposer un appareil de préparation culinaire comportant un dispositif de verrouillage d'un récipient de travail sur un boîtier qui soit simple à utiliser.

Ces buts sont atteints avec un appareil électroménager de préparation culinaire, comportant un récipient de travail monté amovible sur un boîtier logeant un moteur entraînant un axe prévu pour entraîner un outil de travail rotatif monté dans le fond du récipient de travail, des moyens de blocage en rotation du récipient de travail par rapport au boîtier, des moyens de retenue du récipient de travail par rapport au boîtier, les moyens de retenue étant montés dans le boîtier et comprenant au moins une protubérance mobile contre un moyen de rappel élastique, la protubérance étant susceptible d'être déplacée au moyen d'un bouton de déverrouillage monté mobile par rapport au boîtier, la protubérance comportant une partie supérieure biseautée susceptible d'être repoussée par le récipient de travail lors de la mise en place du récipient de travail sur le boîtier et une partie inférieure de retenue susceptible de venir en prise avec le récipient de travail mis en place sur le boîtier, du fait que la protubérance est mobile contre le moyen de rappel élastique selon une direction principalement tangentielle par rapport à l'axe. En d'autres termes, le mouvement de la protubérance contribue plus à déplacer en rotation la protubérance autour de l'axe qu'à éloigner ou à rapprocher ladite protubérance de l'axe. Cette disposition permet de limiter l'encombrement radial du dispositif de verrouillage autour de l'axe, tout en conservant une mise en place aisée du récipient de travail sur le boîtier. Il est ainsi plus facile de loger le dispositif de verrouillage sur le dessus du boîtier de l'appareil, sans augmenter la taille du boîtier. Le bouton de déverrouillage permet d'entraîner la protubérance d'une position de verrouillage dans laquelle le récipient de travail est maintenu en place sur le boîtier à une position de déverrouillage dans laquelle le récipient de travail peut être retiré du boîtier. La direction du mouvement de la protubérance présente de préférence un écart inférieur à 30° par rapport à la direction tangentielle.

Selon une forme de réalisation avantageuse, le récipient de travail est mis en place dans un logement agencé sur le boîtier. En alternative ou en complément, le récipient de travail pourrait être mis en place sur une conformation convexe agencée sur le boîtier. La conformation convexe peut loger la protubérance.

Avantageusement les moyens de blocage en rotation comportent au moins un bossage latéral appartenant au boîtier. Le bossage latéral peut alors être formé sur la paroi latérale du logement. En alternative, le bossage latéral peut être issu d'une conformation convexe.

Avantageusement alors pour une meilleure compacité du dispositif de verrouillage, la protubérance est agencée dans une ouverture latérale dudit bossage latéral. De préférence alors la protubérance est agencée près d'un bord latéral dudit bossage latéral.

Avantageusement encore la protubérance est issue d'une couronne. Cette disposition permet de faciliter le guidage de la protubérance. La couronne peut notamment porter plusieurs protubérances.

Avantageusement alors la couronne est agencée autour de la paroi latérale du logement. Cette disposition permet d'obtenir un mécanisme particulièrement compact.

Avantageusement alors le bouton de déverrouillage entraîne en rotation la couronne, si désiré par l'intermédiaire d'un mécanisme.

Avantageusement encore le bouton de déverrouillage est issu d'une glissière montée coulissante dans le boîtier. En alternative, le bouton de déverrouillage peut notamment appartenir à un levier ou à une pièce rotative.

Avantageusement alors les moyens de retenue comprennent au moins trois protubérances. Cette disposition permet de limiter la hauteur des moyens de blocage en rotation du récipient de travail. Cette disposition permet notamment de limiter la hauteur du logement. De préférence, deux protubérances adjacentes sont éloignées de moins de 180°.

Avantageusement encore, le bouton de déverrouillage entraîne un élément de retenue susceptible de coopérer avec un élément d'accrochage agencé sous un capot monté pivotant par rapport au boîtier. Cette disposition permet d'utiliser le même bouton de déverrouillage pour ouvrir le capot afin de pouvoir mettre en place le récipient de travail ou pour retirer le récipient de travail. L'utilisation de l'appareil est simplifiée.

L'invention sera mieux comprise à l'étude d'un exemple de réalisation, pris à titre nullement limitatif, illustré dans les figures annexées, dans lesquelles :
- la figure 1 est une vue en perspective d'un appareil de préparation culinaire comportant un dispositif de verrouillage selon l'invention,
- la figure 2 est une vue en perspective de dessous du récipient de travail de l'appareil montré à la figure 1,
- la figure 3 est une vue de dessus du boîtier de l'appareil montré à la figure 1,
- la figure 4 est une vue en perspective en éclaté partiel du boîtier de l'appareil montré aux figures 1 et 3,
- la figure 5 est une vue en coupe d'une partie du dispositif de verrouillage en position de verrouillage,
- la figure 6 est une vue en perspective d'une partie du dispositif de déverrouillage, avec le boîtier partiellement retiré,
- la figure 7 est une vue en coupe partielle d'une autre partie du dispositif de verrouillage.

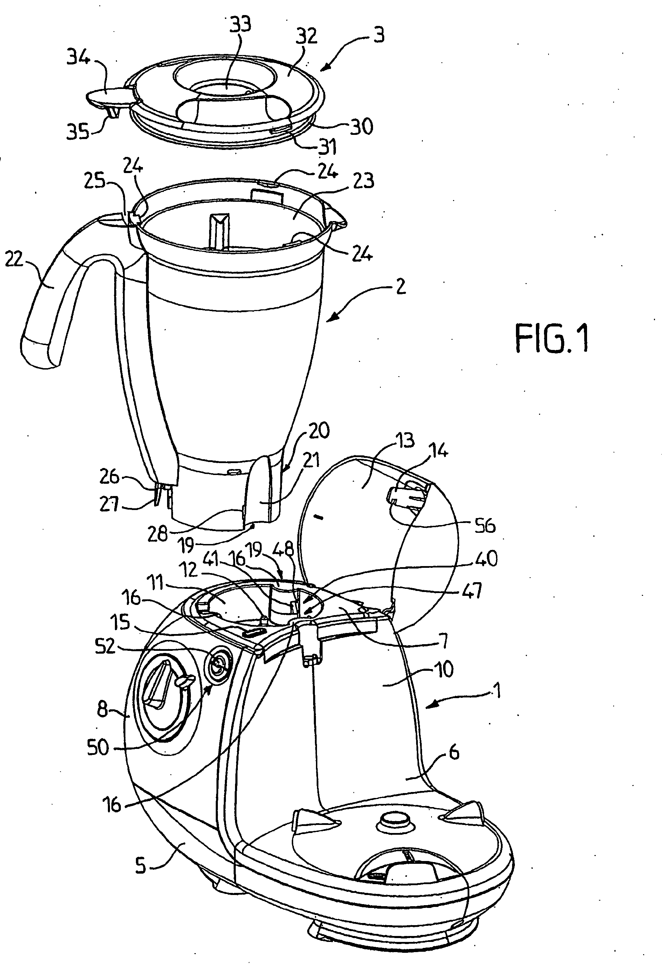

La figure 1 montre un appareil de préparation culinaire comportant un boîtier 1, un récipient de travail 2 et un couvercle 3. La coque extérieure du boîtier 1 comporte une base 5, un corps 6, un siège 7 et une façade 8.

Le boîtier 1 forme un montant 10 dans lequel est logé un moteur. La partie supérieure du montant 10 présente un logement 11 dans lequel est agencé un axe 12 entraîné par le moteur. L'axe 12 porte un moyen d'entraînement, non représenté à la figure 1, prévu pour entraîner en rotation un accessoire de travail rotatif monté dans le fond du récipient de travail 2. Un capot 13 est monté pivotant sur le boîtier 1. Le capot 13 est monté à l'arrière du montant 10. Le capot 13 permet de coiffer le logement 11. Le capot 13 comporte une languette inférieure 14 prévue pour être engagée dans une découpe 15 ménagée sur le dessus du montant 10. La languette inférieure 14 présente un élément d'accrochage 56, tel que par exemple une encoche. Le logement 11 comporte sur sa paroi latérale trois bossages latéraux 16 non équidistants. Les bossages latéraux 16 sont répartis autour de l'axe 12 de manière à ce que l'écart entre deux bossages latéraux 16 soit inférieur à 180°, et de préférence inférieur à 150°.

Le logement 11 est ménagé dans le siège 7. Le capot 13 est monté pivotant sur le corps 6. La découpe 15 est ménagée dans le siège 7.

Le récipient de travail 2 comporte une partie inférieure 20 prévue pour être engagée dans le logement 11. La partie inférieure 20 présente trois rainures latérales externes 21, dont une seule est visible à la figure 1. Les rainures latérales externes 21 forment avec les bossages latéraux 16 des moyens de blocage en rotation 19 du récipient de travail 2 par rapport au boîtier 1.

Le récipient de travail 2 comporte une poignée 22 et une ouverture supérieure 23 susceptible d'être fermée par le couvercle 3. A cet effet le couvercle 3 a une jupe 30 s'engageant dans le récipient de travail 2. La jupe 30 présente sur sa face latérale extérieure des languettes 31 prévues pour coopérer avec des ergots 24 ménagés sur la face interne du bord supérieur du récipient de travail 2. Les languettes 31 et les ergots 24 forment un verrouillage de type à baïonnette.

Le couvercle 3 comporte une couronne supérieure 32 percée d'un orifice de remplissage 33. Une partie latérale externe 34 s'étend à partir de la couronne supérieure 32. Une paroi inférieure 35 issue de la partie latérale externe 34 est prévue pour être engagée dans une encoche 25 ménagée sur le sommet de la poignée 22.

Le récipient de travail 2 comporte une tige de sécurité 26 susceptible d'être déplacée contre un moyen de rappel, non visible aux figures, lorsque le couvercle 3 est verrouillé sur le récipient de travail 2. La tige de sécurité 26 comporte une partie inférieure biseautée 27 et une partie supérieure repoussée par la paroi inférieure 35 du couvercle 3 lorsque le couvercle 3 est verrouillé sur le récipient de travail 2.

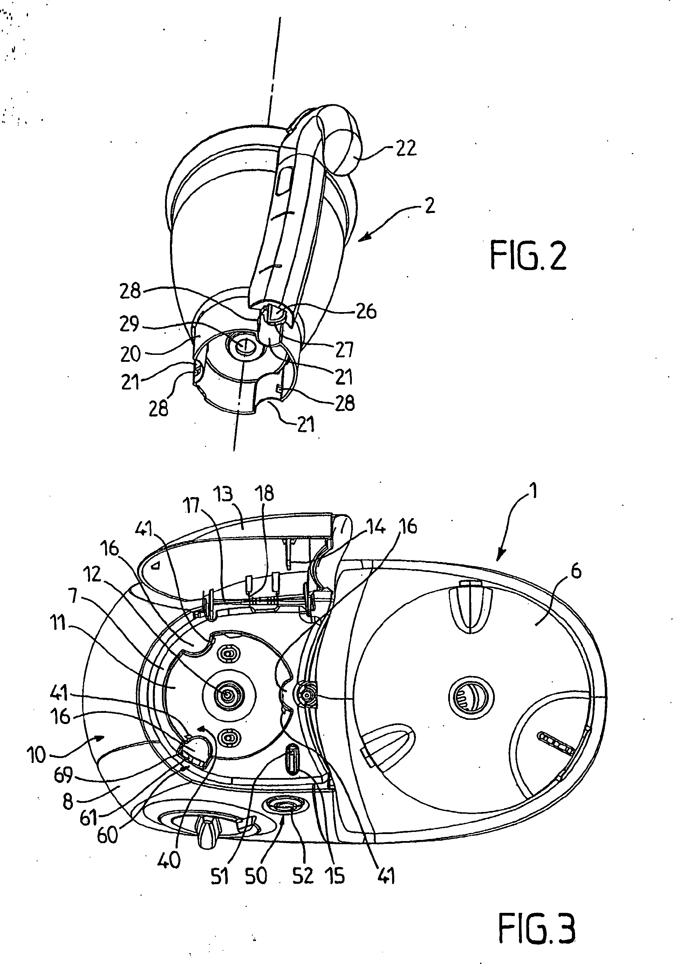

Tel que mieux visible à la figure 2, chaque rainure latérale externe 21 du récipient de travail 2 comporte une encoche latérale 28. L'accessoire de travail rotatif (non représenté à la figure 2) est monté dans une ouverture axiale inférieure 29 ménagée dans le fond du récipient de travail 2.

Tel que visible à la figure 3, le capot 13 est monté pivotant sur une tige 17 montée sur le corps 7. Un moyen de rappel élastique 18 permet de relever le capot 13.

Le boîtier 1 comporte un dispositif de verrouillage 40 prévu pour retenir le récipient de travail 2 monté sur le boîtier 1. Une protubérance 41 est montée dans une ouverture latérale 48 de chacun des bossages latéraux 16. Les protubérances 41 sont agencées près d'un bord latéral desdits bossages latéraux 16. Chacune des protubérances 41 est prévue pour être engagée dans l'une des encoches latérales 28. Les protubérances 41 comportent une partie supérieure biseautée présentant une inclinaison inférieure à 45° par rapport à la direction d'introduction du récipient de travail 2 dans le logement 11, et de préférence inférieure à 30° à ladite direction. Les protubérances 41 sont montées mobiles de manière tangentielle par rapport à la direction radiale s'étendant à partir de l'axe 12. Les protubérances 41 appartiennent au dispositif de verrouillage 40.

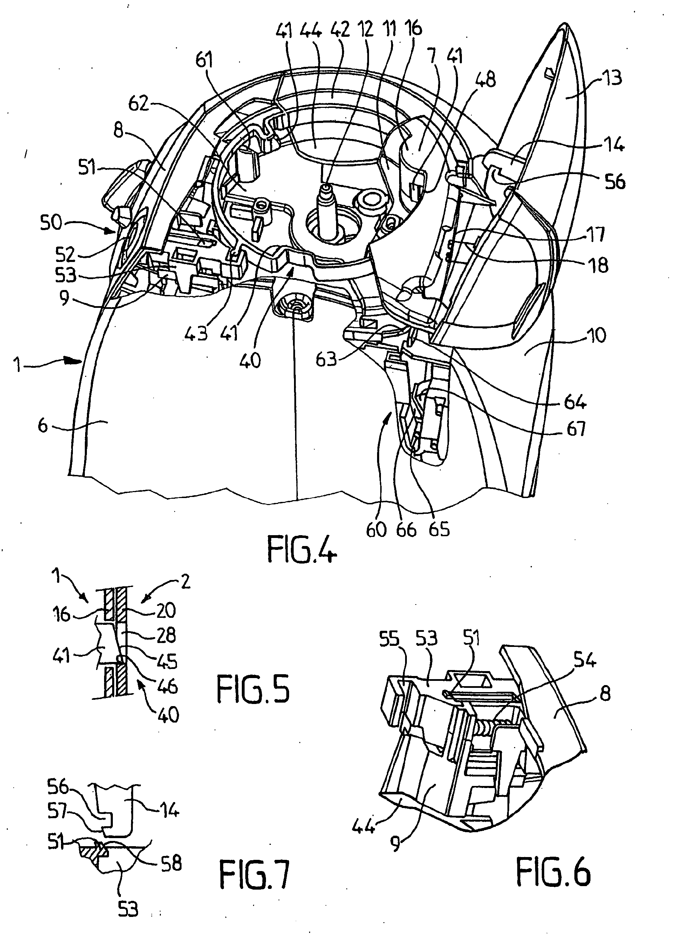

Le boîtier 1 comporte un dispositif de déverrouillage 50 prévu pour libérer le capot 13 et le récipient de travail 2. Le dispositif de déverrouillage 50 comporte un élément de retenue 51 agencé dans le montant 10 derrière la découpe 15. L'élément de retenue 51 est entraîné par un bouton de déverrouillage 52 monté mobile contre un moyen de rappel élastique 54, visible sur la figure 6. Le bouton de déverrouillage 52 est agencé sur la façade 8. L'élément de retenue 51 est susceptible de coopérer avec l'élément d'accrochage 56, visible à la figure 1, agencé sous le capot 13.

Le boîtier 1 comporte un dispositif de sécurité 60 prévu pour détecter la présence du couvercle 3 verrouillé sur le récipient de travail 2 monté sur le boîtier 1. Le dispositif de sécurité 60 comporte une came 61 prévue pour être entraînée par la partie inférieure biseautée 27 de la tige de sécurité 26 du récipient de travail 2 visible aux figures 1 et 2. La came 61 est logée derrière une découpe 69 ménagée sur le dessus du montant 10. La découpe 69 est ménagée dans le siège 7.

La figure 4 montre plus en détail le dispositif de verrouillage 40, le dispositif de déverrouillage 50 et le dispositif de sécurité 60. Une partie du corps 6 et une partie du siège 7 ont été retirées pour une meilleure compréhension des mécanismes.

Les protubérances 41 sont issues d'une couronne 42. La couronne 42 est agencée autour du logement 11. La couronne 42 tourne autour de l'axe 12. La couronne 42 comporte une patte 43 entraînée par le bouton de déverrouillage 52. Le corps 7 forme un réceptacle 44 sous le logement 11. Le réceptacle 44 supporte la couronne 42.

Le bouton de déverrouillage 52 est issu d'une glissière 53 montée coulissante dans le boîtier 1. La glissière 53 coulisse sur un bâti 9 monté dans le boîtier 1. Le bâti 9 supporte le moteur.

La came 61 est issue d'une pièce de transmission 62. La pièce de transmission 62 est montée contre un moyen de rappel élastique, non représenté aux figures. La pièce de transmission 62 comporte une surface de commande 63 coopérant avec un levier 64 pivotant autour d'un axe 65. Le levier 64 comporte une languette d'actionnement 66 coopérant avec un interrupteur 67. La pièce de transmission 62 tourne autour de l'axe 12. La pièce de transmission 62 est repoussée contre le moyen de rappel élastique lorsque le couvercle 3 verrouillé sur le récipient de travail 2 en place sur le boîtier 1. La partie inférieure biseautée 27 de la tige de sécurité 26 occupe alors la position basse repoussant la came 61. La pièce de transmission 62 actionne alors le levier 64 coopérant avec l'interrupteur 67.

La figure 5 montre l'une des protubérances 41 sortie d'une ouverture latérale d'un des bossages latéraux 16. La protubérance 41 est engagée dans l'encoche latérale 28 correspondante de la partie inférieure 20 du récipient 2. La protubérance 41 présente une partie supérieure biseautée 45 facilitant la mise en place du récipient de travail 2 sur le boîtier 1 et une partie inférieure de retenue 46 empêchant le retrait du récipient de travail 2 du boîtier 1.

La figure 6 montre la glissière 53 sur le bâti 9, le siège 7, la couronne 42 et le corps 6 ayant été ôtés. Le moyen de rappel élastique 54 est monté entre le bâti 8 et la glissière 53.

Le bouton de déverrouillage 52 issu de la glissière 53 est ainsi monté mobile contre le moyen de rappel élastique 54. De ce fait, les protubérances 41 sont également mobiles contre le moyen de rappel élastique 54. La glissière 53 présente un guidage 55 prévue pour loger la patte 43 de la couronne 42, visibles à la figure 4. L'élément de retenue 51 prévu pour coopérer avec l'élément d'accrochage 56 du capot 13 est ménagé sur la glissière 53.

La figure 7 montre l'élément d'accrochage 56 formé sur la languette 14 et l'élément de retenue 51 formé sur la glissière 53. L'élément d'accrochage 56 est prolongé par une surface biseautée inférieure 57 et l'élément de retenue 51 présente une surface biseautée supérieure 58 pour permettre de repousser la glissière 53 contre le moyen de rappel élastique 54 (visible à la figure 6) lorsque le capot 13 est rabattu sur le montant 10.

Le fonctionnement de la présente invention est le suivant.

Lorsque le capot 13 est rabattu sur le montant 10, l'élément de retenue 51 vient en prise avec l'élément d'accrochage 56.

Une pression sur le bouton de déverrouillage 52 permet d'éloigner l'élément de retenue 51 de l'élément d'accrochage 56 agencé sous le capot 13. Le capot 13 est alors ramené en position relevée par le moyen de rappel élastique 18.

Lorsque le récipient de travail 2 est mis en place sur le boîtier 1 dans le logement 11, les rainures latérales externes 21 s'engagent autour des bossages latéraux 16. Les parties supérieures biseautées 45 des protubérances 41 sont repoussées par la partie inférieure 20 du récipient de travail 2, entraînant la rotation de la couronne 42. Lorsque les protubérances 41 arrivent en regard des encoches latérales 28, l'élément de rappel associé au bouton de déverrouillage 52 repousse les protubérances 41 dans les encoches latérales 28, entraînant la rotation de la couronne 42 dans le sens opposé. Les parties inférieures de retenue 46 des protubérances 41 maintiennent ainsi le récipient de travail 2 de manière axiale. Les bossages latéraux 16 engageant les rainures latérales externes 21 bloquent en rotation le récipient de travail 2. Le dispositif de verrouillage 40 permet ainsi de verrouiller le récipient de travail 2 sur le boîtier 1.

Pour libérer le récipient de travail 2, l'utilisateur appuie sur le bouton de déverrouillage 52. La couronne 42 est alors entraînée en rotation et les protubérances 41 sont désengagées des encoches latérales 28. Le récipient de travail 2 peut être retiré du logement 11 du boîtier 1.

Ainsi les protubérances 41 forment des moyens de retenue 47 du récipient de travail 2 par rapport au boîtier 1. Les protubérances 41 sont mobiles contre le moyen de rappel élastique 54 selon une direction tangentielle par rapport à l'axe 12, ce qui permet une bonne compacité du dispositif de verrouillage 40. Le récipient de travail 2 peut être mis en place sur le boîtier 1 par un simple mouvement selon la direction définie par l'axe 12, sans nécessiter de mouvement de rotation additionnel ultérieur. Le retrait du récipient de travail 2 est également très simple grâce au bouton de déverrouillage 52.

A titre de variante, les moyens de retenue 47 ne comportent pas nécessairement trois protubérances 41. Les moyens de retenue 47 peuvent comporter au moins une protubérance. Les moyens de retenue 47 comprennent alors des moyens de centrage du récipient de travail 2 sur le boîtier 1. Ces moyens de centrage sont formés par exemple par la paroi latérale du logement 11. A titre de variante, d'autres moyens de centrage du récipient de travail 2 sur le boîtier 1 peuvent être envisagés, par exemple des butées latérales.

A titre de variante, le bouton de déverrouillage 52 n'est pas nécessairement associé à une glissière 53, mais peut par exemple être associé à un levier ou à une pièce rotative. Le bouton de déverrouillage peut entraîner les protubérances 41 seulement de leur position de verrouillage vers leur position de déverrouillage. Le bouton de déverrouillage 52 peut entraîner la couronne 42 par un mécanisme autre que la glissière 53 et le guidage 55. D'autres moyens d'entraînement que la patte 43 et le guidage 55 peuvent être prévus entre la couronne 42 et la glissière 53.

A titre de variante, le moyen de rappel élastique 54 n'est pas nécessairement associé au bouton de déverrouillage 52. Le moyen de rappel élastique 54 peut notamment être associé aux protubérances 41 ou à la couronne 42.

A titre de variante, les moyens de blocage en rotation 19 ne comportent pas nécessairement trois bossages latéraux 16. Le logement 11 n'est pas nécessairement cylindrique, mais peut par exemple être polygonal ou en étoile. Les moyens de blocage en rotation 19 peuvent venir à l'intérieur de la partie inférieure 20 du récipient de travail 2. En alternative ou en complément, les moyens de blocage en rotation 19 peuvent être disposés en dessous du récipient de travail 2.

A titre de variante, le dispositif de verrouillage 40 ne comporte pas nécessairement trois protubérances 41. Une seule protubérance peut être notamment envisagée si logement 11 présente une profondeur suffisante pour le maintien du récipient de travail 2.

A titre de variante, la ou les protubérances 41 ne sont pas nécessairement ménagées sur une couronne. La ou les protubérances ne sont pas nécessairement montées mobiles en rotation, mais peuvent notamment être montées mobiles en translation de manière tangentielle par rapport à l'axe 12.

A titre de variante, la ou les protubérances 41 peuvent être mobiles selon une direction principalement tangentielle par rapport à l'axe 12. La direction du mouvement de la protubérance présente alors un écart inférieur à 45° et de préférence inférieur à 30° par rapport à ladite direction tangentielle.

A titre de variante, le logement 11 peut être remplacé par une conformation convexe autour de laquelle est placée la partie inférieure 20 du récipient de travail 2.

La présente invention n'est nullement limitée à l'exemple de réalisation décrit et à ses variantes, mais englobe de nombreuses modifications dans le cadre des revendications.

## Revendications

1. Appareil électroménager de préparation culinaire, comportant un récipient de travail (2) monté amovible sur un boîtier (1) logeant un moteur entraînant un axe (12) prévu pour entraîner un outil de travail rotatif monté dans le fond du récipient de travail (2), des moyens de blocage en rotation (19) du récipient de travail (2) par rapport au boîtier (1), des moyens de retenue (47) du récipient de travail (2) par rapport au boîtier (1), les moyens de retenue (47) étant montés dans le boîtier (1) et comprenant au moins une protubérance (41) mobile contre un moyen de rappel élastique (54), la protubérance (41) étant susceptible d'être déplacée au moyen d'un bouton de déverrouillage (52) monté mobile par rapport au boîtier (1), la protubérance (41) comportant une partie supérieure biseautée (45) susceptible d'être repoussée par le récipient de travail (2) lors de la mise en place du récipient de travail (2) sur le boîtier (1) et une partie inférieure de retenue (46) susceptible de venir en prise avec le récipient de travail (2) mis en place sur le boîtier (1), **caractérisé en ce que** la protubérance (41) est mobile contre le moyen de rappel élastique (54) selon une direction principalement tangentielle par rapport à l'axe (12).

2. Appareil électroménager de préparation culinaire selon la revendication 1, **caractérisé en ce que** le récipient de travail (2) est mis en place dans un logement (11) agencé sur le boîtier (1).

3. Appareil électroménager de préparation culinaire selon l'une des revendications 1 ou 2, **caractérisé en ce que** les moyens de blocage en rotation (19) comportent au moins un bossage latéral (16) appartenant au boîtier (1).

4. Appareil électroménager de préparation culinaire selon la revendication 3, **caractérisé en ce que** la protubérance (41) est agencée dans une ouverture latérale (48) dudit bossage latéral (16).

5. Appareil électroménager de préparation culinaire selon l'une des revendications 1 à 4, **caractérisé en ce que** la protubérance (41) est issue d'une couronne (42).

6. Appareil électroménager de préparation culinaire selon l'une des revendications 3 ou 4, **caractérisé en ce que** la protubérance (41) est issue d'une couronne (42), **en ce que** le boîtier (1) présenté un logement (11) comportant au moins un bossage latéral (16) appartenant aux moyens de blocage en rotation (19), et **en ce que** la couronne (42) est agencée autour de la paroi latérale du logement (11).

7. Appareil électroménager de préparation culinaire selon l'une des revendications 5 ou 6, **caractérisé en ce que** le bouton de déverrouillage (52) entraîne en rotation la couronne (42).

8. Appareil électroménager de préparation culinaire selon l'une des revendications 1 à 7, **caractérisé en ce que** le bouton de déverrouillage (52) est issu d'une glissière (53) montée coulissante dans le boîtier (1).

9. Appareil électroménager de préparation culinaire selon l'une des revendications 1 à 8, **caractérisé en ce que** les moyens de retenue (47) comprennent au moins trois protubérances (41).

10. Appareil électroménager de préparation culinaire selon l'une des revendications 1 à 9, **caractérisé en ce que** le bouton de déverrouillage (52) entraîne un élément de retenue (51) susceptible de coopérer avec un élément d'accrochage (56) agencé sous un capot (13) monté pivotant par rapport au boîtier (1).

## Claims

1. A food-preparing household electrical appliance including a work receptacle (2) mounted removably on a housing (1) receiving a motor for driving a shaft (12) designed to drive a rotary work tool mounted in the bottom of the work receptacle (2), rotation prevention means (19) for preventing the work receptacle (2) from moving in rotation relative to the housing (1), retaining means (47) for retaining the work receptacle (2) relative to the housing (1), the retaining means (47) being mounted in the housing (1) and comprising at least one protuberance (41) mounted to move against the drive from resilient return means (54), the protuberance (41) being suitable for being moved by means of an unlocking button (52) mounted to move relative to the housing (1), the protuberance (41) having a beveled top portion (45) suitable for being pushed away by the work receptacle (2) when the work receptacle (2) is put in place on the housing (1), and a retaining bottom portion (46) suitable for coming into engagement with the work receptacle (2) put in place on the housing (1), said food-preparing household electrical appliance being **characterized in that** the protuberance (41) is mounted to move against the drive from the resilient return means (54) in a direction that is mainly tangential relative to the shaft (12).

2. A food-preparing household electrical appliance according to claim 1, **characterized in that** the work receptacle (2) is put in place in a recess (11) arranged on the housing (1).

3. A food-preparing household electrical appliance according to claim 1 or claim 2, **characterized in that** the rotation prevention means (19) comprise at least one side projection (16) belonging to the housing (1).

4. A food-preparing household electrical appliance according to claim 3, **characterized in that** the protuberance (41) is arranged in a side opening (48) in said side projection (16).

5. A food-preparing household electrical appliance according to any one of claims 1 to 4, **characterized in that** the protuberance (41) is integral with a ring (42).

6. A food-preparing household electrical appliance according to claim 3 or claim 4, **characterized in that** the protuberance (41) is integral with a ring (42), **in that** the housing (1) has a recess (11) provided with at least one side projection (16) belonging to the rotation prevention means (19), and **in that** the ring (42) is arranged around the side wall of the recess (11).

7. A food-preparing household electrical appliance according to claim 5 or claim 6, **characterized in that** the unlocking button (52) drives the ring (42) in rotation.

8. A food-preparing household electrical appliance according to any one of claims 1 to 7, **characterized in that** the unlocking button (52) is integral with a runner (53) mounted to slide in the housing (1).

9. A food-preparing household electrical appliance according to any one of claims 1 to 8, **characterized in that** the retaining means (47) comprise at least three protuberances (41).

10. A food-preparing household electrical appliance according to any one of claims 1 to 9, **characterized in that** the unlocking button (52) drives a retaining element (51) suitable for co-operating with a fastener element (56) arranged under a cover (13) mounted to pivot relative to the housing (1).

## Patentansprüche

1. Elektrohaushaltsgerät zur Nahrungszubereitung mit einem Arbeitsbehälter (2), der auf einem Gehäuse (1) abnehmbar angeordnet ist, in welchem ein Motor untergebracht ist, der eine Welle (12) antreibt, die zum Antreiben eines drehbaren Arbeitswerkzeugs vorgesehen ist, das am Boden des Arbeitsbehälters (2) angebracht ist, Mitteln zum Blockieren der Drehung (19) des Arbeitsbehälters (2) bezüglich des Gehäuses (1), Mitteln zum Halten (47) des Arbeitsbehälters (2) bezüglich des Gehäuses (1), wobei die Haltemittel (47) im Gehäuse (1) angebracht sind und mindestens einen Vorsprung (41) aufweisen, die gegen ein elastisches Rückstellmittel (54) beweglich ist, wobei der Vorsprung (41) mittels eines Entriegelungsknopfs (52) verstellbar ist, der bezüglich dem Gehäuse (1) beweglich angebracht ist, wobei der Vorsprung (41) einen oberen abgeschrägten Teil (45), der durch den Arbeitsbehälter (2) beim Aufsetzen des Arbeitsbehälters (2) auf das Gehäuse (1) zurückgedrängt werden kann, und einen unteren Halteteil (46) aufweist, der mit dem auf dem Gehäuse (1) aufgesetzten Arbeitsbehälter (2) in Eingriff kommen kann, **dadurch gekennzeichnet, dass** der Vorsprung (41) gegen das elastische Rückstellmittel (54) entlang einer hauptsächlich zur Welle (12) tangentialen Richtung beweglich ist.

2. Elektrohaushaltsgerät zur Nahrungszubereitung nach Anspruch 1, **dadurch gekennzeichnet, dass** der Arbeitsbehälter (2) in eine auf dem Gehäuses (1) angeordnete Aufnahme (11) eingesetzt ist.

3. Elektrohaushaltsgerät zur Nahrungszubereitung nach einem der Ansprüche 1 oder 2, **dadurch gekennzeichnet, dass** die Mittel zum Blockieren der Drehung (19) mindestens einen seitlichen Höcker (16) aufweisen, der zum Gehäuse (1) gehört.

4. Elektrohaushaltsgerät zur Nahrungszubereitung nach Anspruch 3, **dadurch gekennzeichnet, dass** der Vorsprung (41) in einer seitlichen Öffnung (48) des seitlichen Höckers (16) angeordnet ist.

5. Elektrohaushaltsgerät zur Nahrungszubereitung nach einem der Ansprüche 1 bis 4, **dadurch gekennzeichnet, dass** der Vorsprung (41) aus einem Kranz (42) hervorgeht.

6. Elektrohaushaltsgerät zur Nahrungszubereitung nach einem der Ansprüche 3 oder 4, **dadurch gekennzeichnet, dass** der Vorsprung (41) aus einem Kranz (42) hervorgeht, dass das Gehäuse (1) eine Aufnahme (11) mit mindestens einem seitlichen Höcker (16), der zu den Mitteln zum Blockieren der Drehung (19) gehört, und dass der Kranz (42) um die Seitenwand der Aufnahme (11) angeordnet ist.

7. Elektrohaushaltsgerät zur Nahrungszubereitung nach einem der Ansprüche 5 oder 6, **dadurch gekennzeichnet, dass** der Entriegelungsknopf (52) den Kranz (42) in Drehung mitnimmt.

8. Elektrohaushaltsgerät zur Nahrungszubereitung nach einem der Ansprüche 1 bis 7, **dadurch gekennzeichnet, dass** der Entriegelungsknopf (52) aus einer Gleitführung (53) hervorgeht, die im Gehäuse (1) gleitend angebracht ist.

9. Elektrohaushaltsgerät zur Nahrungszubereitung nach einem der Ansprüche 1 bis 8, **dadurch gekennzeichnet, dass** die Haltemittel (47) mindestens drei Vorsprünge (41) aufweist.

10. Elektrohaushaltsgerät zur Nahrungszubereitung nach einem der Ansprüche 1 bis 9, **dadurch gekennzeichnet, dass** der Entriegelungsknopf (52) ein Haltemittel (51) mitnimmt, der mit einem Einhängeelement (56) zusammenwirken kann, das unter einer zum Gehäuse (1) schwenkbaren Haube (13) angeordnet ist
